Europäisches Patentamt

European Patent Office

Office européen des brevets

(19)

(11) Veröffentlichungsnummer : **0 067 431**
**B1**

(12) **EUROPÄISCHE PATENTSCHRIFT**

(45) Veröffentlichungstag der Patentschrift :
01.10.86

(21) Anmeldenummer : 82105136.4

(22) Anmeldetag : 11.06.82

(51) Int. Cl.⁴ : **H 04 Q   3/52**, H 04 B   9/00,
H 04 L 13/00, G 06 F 15/16,
H 04 L 11/16

(54) **Netzwerk mit einer Vielzahl von über optische Mischer miteinander verbindbaren optischen Signalübertragungsleitungen.**

(30) Priorität : 12.06.81 DE 3123448
12.06.81 DE 3123446
12.06.81 DE 3123445

(43) Veröffentlichungstag der Anmeldung :
22.12.82 Patentblatt 82/51

(45) Bekanntmachung des Hinweises auf die Patenterteilung : 01.10.86 Patentblatt 86/40

(84) Benannte Vertragsstaaten :
AT BE CH FR GB IT LI NL SE

(56) Entgegenhaltungen :
EP-A- 0 027 410
EP-A- 0 033 445
DE-A- 2 251 444
DE-A- 2 333 968
DE-A- 2 721 728
US-A- 4 257 124
JOURNAL OF OPTICAL COMMUNICATIONS, Band 1,
Heft 2, November 1980 Berlin, DE H. YAMAMOTO:
"Large-Scale and low-loss optical switch matrix for
optical switching systems", Seiten 74-79
ELECTRONICS INTERNATIONAL, Band 54, Heft 19,
September 1981 New York, US HARVEY J. HINDIN:
"Couplers simplify data bus design", Seiten 43-46
IEEE TRANSACTION ON COMMUNICATIONS, Band
COM-26, Heft 7, Juli 1978 New York, US E.G.
RAWSON: "Fibernet: Multimode optical fibers for
local computer networks", Seiten 983-990

(73) Patentinhaber : **Siemens Aktiengesellschaft Berlin
und München
Wittelsbacherplatz 2
D-8000 München 2 (DE)**

(72) Erfinder : **Sauer, Anton, Dipl.-Ing.
Tristanstrasse 14
D-8034 Germering (DE)**
Erfinder : **Schmidtke, Frank, Dipl.-Ing.
Severingstrasse 5
D-8000 München 90 (DE)**
Erfinder : **Thinschmidt, Hans, Ing. grad.
Kreuzlingerstrasse 52c
D-8034 Germering (DE)**

EP 0 067 431 B1

**Beschreibung**

Die vorliegende Erfindung betrifft ein Netzwerk mit einer Vielzahl von über optische Mischer miteinander verbindbaren optischen Signalübertragungsleitungen, insbesondere zum Datenaustausch in Rechnersystemen.

In einem Netzwerk der obengenannten Art werden die optischen Mischer in aller Regel als optische Sternkoppler realisiert. Nach dem derzeitigen Stand der Technik kann ein derartiger optischer Sternkoppler nur mit relativ wenig Ein- und Ausgängen hergestellt werden, vergl. beispielsweise Elektronik 4/81, S. 63-70 ; Dr. H.H. Witte « Optische Datenbusse für Meß- und Regelaufgaben ». Setzt man optische Sternkoppler in lokalen Netzen ein, kann die Forderung bestehen, daß beispielsweise bis zu 1 000 Teilnehmern (Rechnerknoten im Falle des Einsatzes eines derartigen Netzwerkes in Rechnersystemen) über eine Entfernung von ca. 1 000 m angeschlossen werden, was 1 000 oder mehr Ein-/Ausgangspaaren entspricht. Nachdem optische Sternkoppler bzw. Mischer derzeit mit den bekannten Herstellungsverfahren keinesfalls mit derartig vielen Eingangs-/Ausgangsanschlüssen herstellbar sind, sind solche großen Netzwerke nicht unmittelbar mit solchen Sternkopplern aufzubauen.

Aus der Druckschrift US-A-4 257 124 und aus der Druckschrift EP-A-0 027 410 sind jeweils Netzwerke mit einer Vielzahl von über optische Mischer miteinander verbindbaren optischen Signalübertragungsleitungen bekannt, welche Netzwerke auch zum Datenaustausch in Rechnersystemen einzusetzen sind.

Zur Erweiterung der Anschluß-Kapazitäten der optischen Mischer zum Bilden großer Netzwerke sind gemäß der Druckschrift EP-A-0 027 410 Reihenschaltungen solcher optischer Mischer vorgesehen, wobei in diesem Netzwerk solche Reihenschaltungen von optischen Mischern gebildet werden, die Signalübertragungsstrecken ergeben, welche einander gleich sind.

Der vorliegenden Erfindung liegt die Aufgabe zugrunde, ein Netzwerk mit einer Vielzahl von über optische Mischer miteinander verbindbaren optischen Signalübertragungsleitungen, insbesondere zum Datenaustausch in Rechnersystemen, zu schaffen, das aus einer optischen bzw. optoelektrischen Schaltungsanordnung, welche den Anschluß einer entsprechend großen Anzahl von Teilnehmern zuläßt, und einer gemeinsamen zentralen Steuerung besteht.

Die genannte Aufgabe wird durch ein Netzwerk mit einer Vielzahl von über optische Mischer miteinander verbindbaren optischen Signalübertragungsleitungen, insbesondere zum Datenaustausch in Rechnersystemen, bei dem zum Zweck der Erweiterung der Anschluß-Kapazitäten der optischen Mischer zum Bilden eines großen Netzwerkes Reihenschaltungen solcher optischer Mischer vorgesehen sind, wobei Reihenschaltungen dieser optischen Mischer derart gebildet werden, daß sich Signalübertragungsstrecken ergeben, die einander gleich sind, und wobei in als Zwischenleitungen eines aus den Reihenschaltungen gebildeten volkommenen Bündels wirkenden individuellen Verbindungen zwischen den betreffenden Lichtsignaleingängen einer Lichtsignal-Ausgangsgruppe und den betreffenden Lichtsignalausgängen einer Lichtsignal-Eingangsgruppe jeweils individuell aktive optoelektronische Schaltkreise eingefügt sind, gelöst, das dadurch gekennzeichnet ist, daß den aktiven optoelektronischen Schaltkreisen eine gemeinsame zentrale Steuerung zugeordnet ist und daß die zentrale Steuerung dahingehend wirkt, daß maximal gleichzeitig soviel individuelle Verbindungen durchgeschaltet werden, wie die Lichtsignal-Eingangsgruppe bzw. Lichtsignal-Ausgangsgruppe Sternkoppler enthält, jedoch jeweils nur eine einzige Verbindung zu ein und demselben Sternkoppler der Lichtsignal-Ausgangsgruppe.

Die Erfindung bietet den Vorteil, daß praktisch beliebig große Netzwerke geschaffen werden können, ohne daß es in einem derartigen Netzwerk zu sog. Verbindungskollisionen kommt.

Vorteilhafte Weiterbildungen der Erfindung sind durch die in den Unteransprüchen angegebenen Merkmale gekennzeichnet.

Im folgenden wird die Erfindung anhand mehrerer Ausführungsbeispiele für die Erfindung betreffender Figuren im einzelnen erläutert.

Figur 1 zeigt ein Ausführungsbeispiel für ein Koppelnetzwerk $K'$ mit in die Zwischenleitungen eingefügten aktiven Elementen AE und einer an zentraler Stelle angeordneten Steuerung ST gemäß der vorliegenden Erfindung.

Figur 2 zeigt ein weiteres Ausführungsbeispiel für ein Koppelnetzwerk $K'$ ähnlich dem Ausführungsbeispiel gemäß Fig. 1, jedoch mit einer anderen vorteilhaften Anordnung und Anschaltung der zentralen Steuerung ST.

Figur 3 zeigt ein weiteres Ausführungsbeispiel für ein Koppelnetzwerk $K'$ ähnlich dem Ausführungsbeispiel gemäß Fig. 2, bei dem jedoch durch Einführung weiterer Koppelstufen nur noch ein aktives Element AE mit zugehöriger Steuerung benötigt wird.

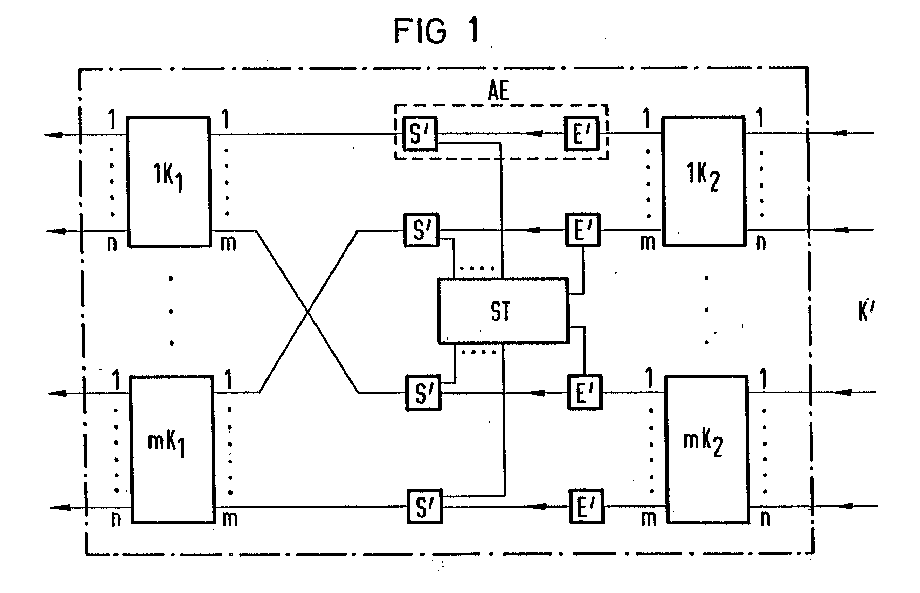

Wie bereits erläutert, zeigt Fig. 1 ein Ausführungsbeispiel für ein 2-stufiges Koppelnetzwerk $K'$. Als optische Mischer werden hier sog. optische Sternkoppler $1K_1 ... mK_1$, $1K_2 ... mK_2$ verwendet. Die optischen Mischer, nämlich die Sternkoppler, sind zum Zwecke der Erweiterung ihrer Anschluß-Kapazitäten zum Bilden eines großen Netzwerkes in Form eines aus der Vermittlungstechnik her bekannten vollkommenen Bündels in der gezeigten Weise in Reihe geschaltet. Die Sternkoppler sind derart angeordnet, daß eine Anordnung von m Sternkopplern $1K_1 ... mK_1$ in einer Lichtsignal-Ausgangsgruppe vorgesehen ist. Es ist eine weitere Anordnung von m Sternkopplern $1K_2 ... mK_2$ in einer Lichtsignal-Eingangsgruppe vorgesehen. Jeweils jeder von m Lichtsignalausgängen jedes der Sternkoppler $1K_2 ... mK_2$ der Lichtsignal-Eingangsgruppe ist über einen individuellen Lichtwellenleiter an den Eingang eines diesem zugeordneten aktiven elektrooptischen Schaltkreises AE angeschlossen. Außerdem ist jeweils jeder von m Lichtsignaleingängen der Sternkoppler $1K_1 ... mK_1$ der Lichtsignal-Ausgangsgruppe mit einem ihm individuell zugeordneten aus m Lichtsignalausgängen der Sternkoppler $1K_2 ... mK_2$ der Lichtsignal-Eingangsgruppe derart mittelbar verbunden, daß sich ein vollkommenes Bündel mit jeweils einer Verbindung jedes von jeweils n Lichtsignaleingängen mit jedem von jeweils n Lichtsignalausgängen über jeweils zwei in Reihe geschaltete Sternkoppler $1K_1 ... mK_1$; $1K_2 ... mK_2$ ergibt.

Jeder Lichtwellenleiter-Kreis beginnt bei einem Teilnehmer (nicht gezeigt), beispielsweise einem Rechnerknoten, bei einem Sender (nicht gezeigt) mit einer Sendeader, durchläuft hintereinander zwei Sternkoppler, z. B. $1K_2$ und $1K_1$, und endet mit einer Empfangsader bei einem Empfänger (nicht gezeigt) desselben Teilnehmers.

Alle Lichtwellenleiter-Kreise sind gleich und symmetrisch aufgebaut. Sendet ein Teilnehmer eine Nachricht, so verteilt der zugehörige Sternkoppler der Lichtsignal-Eingangsgruppe die Nachricht auf alle Sternkoppler der Lichtsignal-Ausgangsgruppe. Von da aus gelangt die Nachricht an die Empfänger aller Teilnehmer. Das Koppelnetzwerk K' behält dabei neben der Möglichkeit der Ausbreitung der Nachrichten auch alle anderen Eigenschaften eines einfachen Sternkopplers, beispielsweise einen günstigen Pegeldynamik-Bereich und die Tatsache, daß ein rein passives Element vorliegt. Die Dämpfung eines Lichtwellenleiter-Kreises eines Koppelnetzwerkes K' erhöht sich gegenüber der Dämpfung eines einfachen Sternkopplers um einen Faktor, der der Anzahl der Koppelstufen innerhalb des Koppelnetzwerks K' entspricht, wenn Sternkoppler mit dem gleichen Verhältnis « Eingänge zu Ausgänge » (n : m) verglichen werden. Ein Sternkoppler K ist bezüglich der Nachrichtenübertragung nicht gerichtet, d. h. die Seite « n » oder « m » kann freizügig als Eingang oder Ausgang angesehen werden.

Hat ein Sternkoppler K n Eingänge und m Ausgänge, so sind mit einem 2-stufigen Koppelnetzwerk K' $n \cdot m$ Teilnehmeranschlüsse zu erzielen. In diesem Fall sind für das Koppelnetzwerk K' $2 \cdot m$ Sternkoppler erforderlich. Der geringste Aufwand entsteht, wenn Sternkoppler K mit möglichst vielen Eingängen n verwendet werden.

Ein Koppelnetzwerk K' kann beim kleinsten Aufbau aus zwei Sternkopplern $1K_1$ und $1K_2$ bestehen. Die nicht benötigten Eingänge bzw. Ausgänge für die Zwischenleitungen bleiben unbeschaltet. Soll das Koppelnetzwerk K' für eine größere Teilnehmerzahl ausgebaut werden, so fügt man weitere Sternkopplerpaare, beispielsweise $2K_1$ und $2K_2$ entsprechend Fig. 1, hinzu. Vorteilhafterweise ist eine derartige Erweiterung auch während des Betriebs des betreffenden Systems möglich.

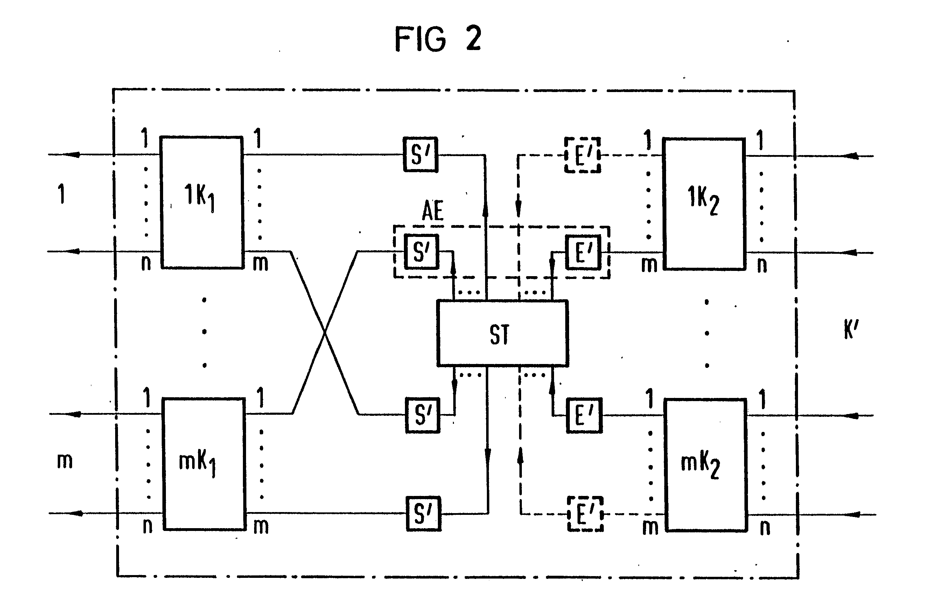

Gemäß der Erfindung können die aktiven optoelektronischen Schaltkreise AE jeweils einen optoelektrischen Signalempfänger E' und einen elektrooptischen Signalsender S' enthalten, vergl. Fig. 1 und Fig. 2. Vorteilhafterweise ist vorgesehen, daß die elektrooptischen Signalsender S' ein- und ausschaltbar sind. Außerdem haben die optoelektrischen Signalempfänger E' vorteilhafterweise gemäß einer Weiterbildung der Erfindung jeweils einen individuellen Indikator (nicht gezeigt), der einen Signalfluß erkennt.

Eine vorteilhafte Weiterbildung der Erfindung sieht vor, daß den jeweils einem Sternkoppler der Lichtsignal-Eingangsgruppe zugeordneten optoelektrischen Signalempfängern E' jeweils ein gemeinsamer Indikator (nicht gezeigt) zugeordnet ist. Ein solcher Indikator kann den elektrooptischen Signalsender S' mittelbar oder unmittelbar steuern, d. h. ihn aktiv oder passiv schalten.

Den aktiven optoelektronischen Schaltkreisen AE ist eine gemeinsame zentrale Steuerung ST zugeordnet.

Ein jeweils betreffender elektrooptischer Signalsender S' wird nur dann eingeschaltet, wenn der betreffende Indikator bzw. der gemeinsame Indikator ein von dem betreffenden Lichtsignalausgang der Lichtsignal-Eingangsgruppe eintreffendes Signal als unverfälscht erkennt. Dieser Umstand ist von besonderer Bedeutung, da in einem Netzwerk, wie es der Erfindung zugrundeliegt, Zugriffskollisionen auftreten, wenn zwei oder mehr Teilnehmer gleichzeitig auf das Netzwerk zugreifen. In einem solchen Fall würden die von den individuellen Teilnehmersendern ausgehenden Signale gemischt und demzufolge verfälscht werden.

Gemäß der Erfindung ist jedoch vorgesehen, daß die zentrale Steuerung ST dahingehend wirkt, daß maximal gleichzeitig soviel individuelle Verbindungen durchgeschaltet werden, wie die Lichtsignal-Eingangsgruppe bzw. die Lichtsignal-Ausgangsgruppe Sternkoppler enthält, jedoch jeweils nur eine einzige Verbindung zu ein und demselben Sternkoppler der Lichtsignal-Ausgangsgruppe. Damit ist erreichbar, daß Verfälschungen eines Informationsflusses vermieden werden.

Gemäß einer anderen vorteilhaften Weiterbildung der Erfindung ist vorgesehen, daß die zentrale Steuerung ST eine an sich bekannte Vermittlungsfunktion ausüben kann.

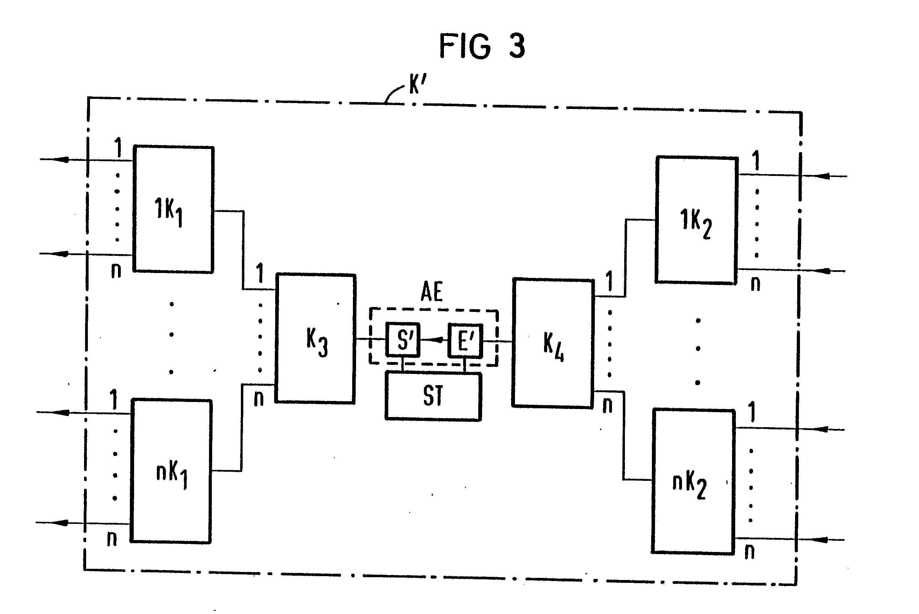

Fig. 3 zeigt, wie bereits erläutert, ein weiteres Ausführungsbeispiel für ein Koppelnetzwerk K' ähnlich dem Ausführungsbeispiel gemäß Fig. 2, bei dem jedoch durch Einführung weiterer Koppelstufen $K_3$, $K_4$ nur noch ein einziger aktiver Schaltkreis AE mit zugehöriger Steuerung ST benötigt wird.

Zusammenfassend ist festzustellen, daß bei einem Netzwerk gemäß der vorliegenden Erfindung, bei dem ein Koppelnetzwerk K' mit Sternkopplern aufgebaut ist, das Verhältnis der Zahl der Eingänge zu der Zahl der Ausgänge frei gewählt werden kann. Ein derartiges Koppelnetzwerk K' behält die Eigenschaft eines einzelnen Sternkopplers, wenn von der durch die Reihenschaltung von Sternkopplern bedingten erhöhten Dämpfung abgesehen wird. Das Koppelnetzwerk K' kann vorteilhafterweise in einem Gehäuse untergebracht werden, wodurch die Dämpfung der Zwischenleitungen wegen der dadurch bedingten kurzen Leitungsführung vernachlässigbar bleibt.

**Patentansprüche**

1. Netzwerk mit einer Vielzahl von über optische Mischer ($1K_1$, $1K_2$... $mK_2$) miteinander verbindbaren optischen Signalübertragungsleitungen, insbesondere zum Datenaustausch in Rechnersystemen, bei dem zum Zweck der Erweiterung der Anschluß-Kapazitäten der optischen Mischer ($1K_1$, $1K_2$... $mK_2$) zum Bilden eines großen Netzwerkes Reihenschaltungen solcher optischer Mischer vorgesehen sind, wobei Reihenschaltungen dieser optischen Mischer derart gebildet werden, daß sich Signalübertragungsstrecken ergeben, die einander gleich sind, und wobei in als Zwischenleitungen eines aus den Reihenschaltungen gebildeten vollkommenen Bündels wirkenden individuellen Verbindungen zwischen den betreffenden Lichtsignaleingängen (1...m) einer Lichtsignal-Ausgangsgruppe und den betreffenden Lichtsignalausgängen (1...m) einer Lichtsignal-Eingangsgruppe jeweils individuell aktive optoelektronische Schaltkreise (AE) eingefügt sind, dadurch gekennzeichnet,

daß den aktiven optoelektronischen Schaltkreisen (AE) eine gemeinsame zentrale Steuerung (ST) zugeordnet ist und

daß die zentrale Steuerung (ST) dahingehend wirkt, daß maximal gleichzeitig soviel individuelle Verbindungen durchgeschaltet werden, wie die Lichtsignal-Eingangsgruppe bzw. die Lichtsignal-Ausgangsgruppe Sternkoppler enthält, jedoch jeweils nur eine einzige Verbindung zu ein und demselben Sternkoppler der Lichtsignal-Ausgangsgruppe.

2. Netzwerk nach Anspruch 1, dadurch gekennzeichnet, daß die aktiven optoelektronischen Schaltkreise (AE) Signalverstärker sind.

3. Netzwerk nach Anspruch 1, dadurch gekennzeichnet, daß die aktiven optoelektronischen Schaltkreise (AE) jeweils einen optoelektrischen Signalempfänger (E') und einen elektrooptischen Signalsender (S') enthalten.

4. Netzwerk nach Anspruch 3, dadurch gekennzeichnet, daß die elektrooptischen Signalsender (S') ein- und ausschaltbar sind.

5. Netzwerk nach Anspruch 3, dadurch gekennzeichnet, daß die optoelektrischen Signalempfänger (E') jeweils einen individuellen Indikator haben, der einen Signalfluß erkennt.

6. Netzwerk nach Anspruch 3, dadurch gekennzeichnet, daß den jeweils einem Sternkoppler der Lichtsignal-Eingangsgruppe zugeordneten optoelektrischen Signalempfängern (E') jeweils ein gemeinsamer Indikator zugeordnet ist.

7. Netzwerk nach den Ansprüchen 4 und 5, dadurch gekennzeichnet, daß der Indikator den elektrooptischen Signalsender (S') mittelbar oder unmittelbar steuert.

8. Netzwerk nach Anspruch 7, dadurch gekennzeichnet, daß jedem optoelektronischen Schaltkreis (AE) eine individuelle Steuerung zugeordnet ist.

9. Netzwerk nach den Ansprüchen 4 und 5 oder 6, dadurch gekennzeichnet, daß ein jeweils betreffender elektrooptischer Signalsender (S') nur dann eingeschaltet wird, wenn der betreffende Indikator ein von dem betreffenden Lichtsignalausgang der Lichtsignal-Eingangsgruppe eintreffendes Signal als unverfälscht erkennt.

10. Netzwerk nach Anspruch 1, dadurch gekennzeichnet, daß die zentrale Steuerung (ST) Vermittlungsfunktionen ausüben kann.

**Claims**

1. A network comprising a plurality of optical signal transmission lines which can be connected to one another via optical mixers ($1K_1$, $1K_2$... $mK_2$), in particular for data exchange in computer systems, wherein, in order to extend the connection capacities of the optical mixers ($1K_1$, $1K_2$... $mK_2$) to form a large network, series arrangements of such optical mixers are provided, formed such that signal transmission links which are mutually identical are produced and where individually active, opto-electronic circuits (AE) are interposed in individual connections which serve as intermediate lines of a complete group, formed from the series arrangements, and which extend between the relevant light signal inputs (1...m) of a light signal output group and the relevant light signal outputs (1...m) of a light signal input group, characterised in that

a common, central control unit (ST) is assigned to the active opto-electronic circuits (AE) and

that the central control unit (ST) operates in that the maximum number of individual connections which simultaneously switched through corresponds to the number of star couplers contained by the light signal input group or light signal output group, although only one single connection is in each case switched through to one and the same star coupler of the light signal output group.

2. A network as claimed in Claim 1, characterised in that the active opto-electronic circuits (AE) are signal amplifiers.

3. A network as claimed in Claim 1, characterised in that the active opto-electronic circuits (AE) each contain an opto-electronic signal receiver (E') and an electro-optical signal transmitter (S').

4. A network as claimed in Claim 3, characterised in that the electro-optical signal transmitters (S') can be switched on and off.

5. A network as claimed in Claim 3, characterised in that the opto-electrical signal receivers (E') each have an individual indicator which recognises a signal flow.

6. A network as claimed in Claim 3, characterised in that the opto-electrical signal receivers (E') which are each assigned to a star coupler of the light signal input group are assigned a common indicator.

7. A network as claimed in Claims 4 and 5, characterised in that the indicator indirectly or directly controls the electro-optical signal transmitter (S').

8. A network as claimed in Claim 7, characterised in that each opto-electronic circuit (AE) is assigned an individual control unit.

9. A network as claimed in Claims 4 and 5 or 6, characterised in that the relevant electro-optical signal transmitter (S') is switched on only if the relevant indicator identifies that a signal arriving from the relevant light signal output of the light signal input group is not adulterated.

10. A network as claimed in Claim 1, characterised in that the central control unit (ST) can carry out switching functions.

**Revendications**

1. Réseau comprenant un grand nombre de lignes de transmission de signaux optiques interconnectables par des mélangeurs optiques (1K$_1$, 1K$_2$... mK$_2$), en particulier pour l'échange de données dans des systèmes d'ordinateurs, dans lequel des montages en série de tels mélangeurs optiques sont prévus dans le but d'étendre les capacités de raccordement des mélangeurs optiques (1K$_1$, 1K$_2$... mK$_2$) en vue de la formation d'un grand réseau, des montages en série de ces mélangeurs optiques étant réalisés de manière qu'il se forme des circuits de transmission de signaux identiques entre eux, et dans lequel des circuits optoélectroniques de connexion (AE), actifs individuellement, sont insérés dans des liaisons individuelles, agissant comme des lignes intermédiaires d'un faisceau parfait constitué des montages en série, entre les entrées de signaux lumineux (1...m) concernées d'un groupe de sorties de signaux lumineux et les sorties de signaux lumineux (1...m) concernées d'un groupe d'entrées de signaux lumineux, caractérisé en ce qu'une commande centrale (ST) commune est coordonnée aux circuits optoélectroniques actifs de connexion (AE) et

que la commande centrale (ST) agit en ce sens qu'au maximum autant de liaisons individuelles soient acheminées simultanément que le groupe d'entrées de signaux lumineux ou le groupe de sorties de signaux lumineux contient de coupleurs en étoile, mais qu'une seule liaison soit acheminée chaque fois vers un seul et même coupleur en étoile du groupe de sorties de signaux lumineux.

2. Réseau selon la revendication 1, caractérisé en ce que les circuits optoélectroniques actifs de connexion (AE) sont des amplificateurs de signaux.

3. Réseau selon la revendication 1, caractérisé en ce que les circuits optoélectroniques actifs de connexion (AE) contiennent chacun un récepteur optoélectronique de signaux (E') et un émetteur électro-optique de signaux (S').

4. Réseau selon la revendication 3, caractérisé en ce que les émetteurs électro-optiques de signaux (S') peuvent être mis en circuit et hors circuit.

5. Réseau selon la revendication 3, caractérisé en ce que les récepteurs optoélectriques de signaux (E') possèdent chacun un indicateur individuel qui détecte une circulation de signaux.

6. Réseau selon la revendication 3, caractérisé en ce qu'un indicateur commun est coordonné chaque fois aux récepteurs optoélectriques de signaux (E') coordonnés à un coupleur en étoile du groupe d'entrées de signaux lumineux.

7. Réseau selon les revendications 4 et 5, caractérisé en ce que l'indicateur commande l'émetteur électro-optique de signaux (S') directement ou indirectement.

8. Réseau selon la revendication 7, caractérisé en ce qu'une commande individuelle est coordonnée à chaque circuit optoélectronique de connexion (AE).

9. Réseau selon les revendications 4 et 5 ou 6, caractérisé en ce qu'un émetteur électro-optique de signaux (S') concerné est seulement mis en circuit lorsque l'indicateur en question reconnaît un signal provenant de la sortie de signaux lumineux correspondants du groupe d'entrées de signaux lumineux comme étant non faussé.

10. Réseau selon la revendication 1, caractérisé en ce que la commande centrale (ST) peut exercer des fonctions de commutation.

FIG 1

FIG 2

FIG 3